# EUROPEAN PATENT SPECIFICATION

(11) **EP 3 579 378 B1**
(45) Date of publication and mention of the grant of the patent: **19.08.2020**
(21) Application number: 18874982.4
(22) Date of filing: 12.10.2018
(51) Int. Cl.: H02J 7/02, H02J 50/10

(54) **INTELLIGENT IN-VEHICLE WIRELESS CHARGING DEVICE**
INTELLIGENTE DRAHTLOSLADEVORRICHTUNG FÜR FAHRZEUG
APPAREIL DE CHARGE SANS FIL MONTÉ SUR UN VÉHICULE INTELLIGENT

(30) Priority: 11.04.2018 CN 201810319521
(43) Date of publication of application: 11.12.2019
(73) Proprietor: Changzhou Xingyu Automotive Lighting Systems Co., Ltd, Xinbei District Changzhou Jiangsu 213022 (CN)
(72) Inventor: XU, Lei, Changzhou, Jiangsu 213022 (CN); REN, Kangcheng, Changzhou, Jiangsu 213022 (CN); NI, Pengpeng, Changzhou, Jiangsu 213022 (CN); WANG, Wenbin, Changzhou, Jiangsu 213022 (CN)
(74) Representative: Kayahan, Senem
(86) International application number: PCT/CN2018/110030
(87) International publication number: WO 2019/196367

(56) References cited:
- CN-A- 102 263 441
- CN-A- 103 270 672
- US-A1- 2015 123 496

## Description

### Technical Field

The present invention belongs to the technical field of vehicle wireless and power supply management, in particular to an intelligent in-vehicle wireless charging device, which is particularly suitable for multi-device, multi-protocol charging occasions.

### Background

With the rapid development of the electronics industry, electronic device emerges one after another, and every user is in possession of at least one or two mobile devices. However, charging these devices have always been an issue. For example, if there are multiple devices that need to be charged during a drive, it is troublesome to use the traditional wired charging. In view of this, the vehicle wireless charging device has come into being at the right moment.

Most of the vehicle wireless charging devices, popular in the market, use single-coil or three-coil charging mode. One characteristic of these charging modes is that they do not allow simultaneous charging of multiple devices, much less support charging of multiple devices with different protocols, and a device alignment is required. Therefore, the use of these devices greatly affects the user experience.

### Summary

In order to provide the multi-protocol support and solve multi-device charging problems of the vehicle wireless charging devices, the present invention provides an intelligent in-vehicle wireless charging device having high reliability, high charging efficiency, and capability of providing multi-device charging, multi-protocol support, and intelligently managing the devices to be charged.

In order to achieve the above objective, the present invention adopts the following technical solutions.

An intelligent in-vehicle wireless charging device includes an electric power supply unit, a control unit, a signal modulation and demodulation unit, a driving unit, a coil module unit, and a communication unit. The control unit is respectively connected to the electric power supply unit, the signal modulation and demodulation unit, the driving unit, and the communication unit. The driving unit is connected to the coil module unit. The coil module unit is connected to the signal modulation and demodulation unit.

The electric power supply unit supplies power to other units. The control unit controls the driving unit to drive the coil module unit to generate oscillation. The signal modulation and demodulation unit demodulates information from the electronic devices and simultaneously modulates information sent by the control unit onto the coil module unit. The communication unit interacts with the vehicle body or peripheral devices for information.

Further, the electric power supply unit includes a protection module, a voltage management module, and a voltage output module which are connected successively. The power management module is configured for a conversion of a wide voltage from 5 V to 25 V; and the power output module provides operating voltage for the wireless charging device.

Further, the control unit includes a learning module, a storage module, and a control module which are connected successively. The learning module uses a convolutional neural network algorithm to record the ID numbers of various electronic devices, analyzes the battery status of the electronic devices, and stores data in the storage module. The control module extracts the data from the storage module, and then performs a BMS (Battery Management System) management for an electronic device previously recorded; and the control module uses a fuzzy algorithm to control the driving operation of the driving unit.

Further, the signal modulation and demodulation unit includes a multi-channel signal identification module, a signal processing module, a protocol module, and a multi-channel signal transmission module, which are connected successively. The multi-channel signal identification module simultaneously demodulates multi-channel ASK signals to realize the conversion from analog signal to digital signal. The signal processing module is responsible for the routing management of the communication of multiple electronic devices, and encodes and encapsulates the digital signals of the multi-channel signal identification module. The encapsulated signal is translated by the protocol module according to the QI standard or the PMA standard. The protocol module passes the translated signal to the control unit for processing, and the protocol module transmits the control command signal from the control unit to the multi-channel signal transmission module according to the QI standard or the PMA standard. The multi-channel signal transmission module simultaneously modulates the multi-channel signal according to the FSK mode and loads the modulated signal onto the specified coil of the coil module unit.

Further, the driving unit drives the coil module unit to work by using a half-bridge or a full-bridge method.

Further, the coil module unit includes an array signal antenna and a capacitor module which are connected to each other. The array signal antenna is composed of a plurality of sets of coils arranged according to the spatial distribution of the magnetic field; and the array signal antenna controls the operation of the corresponding single or multiple sets of array antennas through the control unit. The capacitor module is an integrated circuit composed of a plurality of capacitors; and the capacitor module changes the capacitance value according to the instruction of the control unit, so as to match the array signal antenna to generate different oscillation frequencies.

Further, the communication modes adopted by the communication unit include LIN, CAN, MOST, and Bluetooth.

### Advantages:

According to the present invention, an array wireless antenna, an electronic frequency modulation method, a multi-channel routing technology, and FSK and ASK modulation techniques are used to realize the functions of multi-device, multi-protocol charging, and charging the devices without alignment. Furthermore, a convolutional neural network algorithm and a fuzzy algorithm are used to solve the problems of intelligent charging management and efficient charging of the devices.

### Brief Description of the Drawings

Fig. 1 is a block diagram showing an overall structure according to an embodiment of the present invention;
Fig. 2 is a block diagram showing the components of an electric power supply unit according to an embodiment of the present invention;
Fig. 3 is a block diagram showing the components of a control unit according to an embodiment of the present invention;
Fig. 4 is a block diagram showing the components of a signal modulation and demodulation unit according to an embodiment of the present invention; and
Fig. 5 is a block diagram showing the components of a coil module unit according to an embodiment of the present invention.

The reference designators in the drawings are described below: 1-electric power supply unit, 2-control unit, 3-signal modulation and demodulation unit, 4-driving unit, 5-coil module unit, 6-communication unit, 10-protection module, 11-power management module, 12-power output module, 20-learning module, 21-storage module, 22-control module, 30-multi-channel signal identification module, 31-signal processing module, 32-protocol module, 33-multi-channel signal transmission module, 50-array signal antenna, 51-capacitor module.

### Detailed Description of the Embodiments

The present invention will be further described below with reference to the drawings and embodiments.

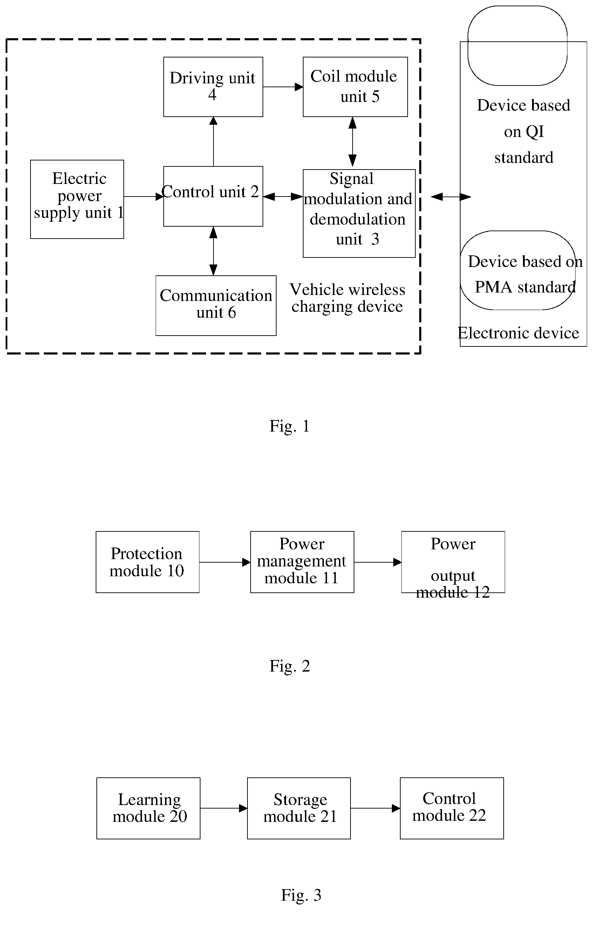

The present embodiment provides an intelligent in-vehicle wireless charging device. As shown in Fig. 1, the intelligent in-vehicle wireless charging device includes electric power supply unit 1, control unit 2, signal modulation and demodulation unit 3, driving unit 4, coil module unit 5, and communication unit 6. Control unit 2 is respectively connected to electric power supply unit 1, signal modulation and demodulation unit 3, driving unit 4, and communication unit 6. Driving unit 4 is connected to coil module unit 5. Coil module unit 5 is connected to signal modulation and demodulation unit 3.

Electric power supply unit 1 supplies power to other units. Control unit 2 controls driving unit 4 to drive coil module unit 5 to generate oscillation. Signal modulation and demodulation unit 3 demodulates the information from the electronic devices and simultaneously modulates the information sent by control unit 2 onto coil module unit 5. Communication unit 6 interacts and share information with the vehicle body or periphery devices.

As shown in Fig. 2, electric power supply unit 1 is a component for supplying power to the entire wireless charging device. Electric power supply unit 1 includes protection module 10, power management module 11, and power output module 12 which are connected successively. Protection module 10 plays a role of isolation to protect the wireless charging device from the impact of the power supply of the vehicle and to prevent the failed wireless charging device from affecting the vehicle. Power management module 11 is configured for a conversion of a wide voltage from 5 V to 25 V, which allows a voltage input in a range from 5 V to 25 V. Power output module 12 provides operating voltage for the wireless charging device.

As shown in Fig. 3, control unit 2 is a processing system of the wireless charging device. Control unit 2 includes learning module 20, storage module 21, and control module 22 which are connected successively. Learning module 20 uses a convolutional neural network algorithm to record the ID numbers of various electronic devices, analyzes the battery status of the electronic devices, and stores data in storage module 21. Control module 22 extracts the data from storage module 21, and then performs BMS management for an electronic device ever recorded. Meanwhile, control module 22 optimizes the traditional PID algorithm by using a fuzzy algorithm, which can control the driving operation of driving unit 4 more efficiently and achieve higher power conversion efficiency.

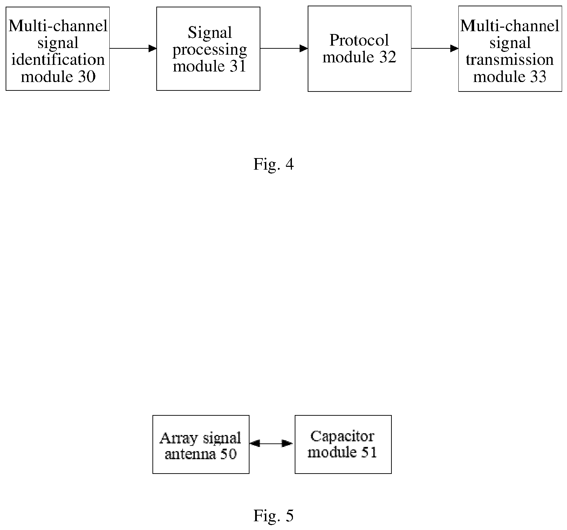

As shown in Fig. 4, signal modulation and demodulation unit 3 is an interactive system of the wireless charging device and the electronic devices. Signal modulation and demodulation unit 3 includes multi-channel signal identification module 30, signal processing module 31, protocol module 32, and multi-channel signal transmission module 33 which are connected successively. Multi-channel signal identification module 30 demodulates multi-channel ASK signals simultaneously to realize the conversion from analog signal to digital signal. Signal processing module 31 is responsible for the routing management of the communication of multiple electronic devices, and encodes and encapsulates the digital signals of multi-channel signal identification module 30. The encapsulated signal is translated by protocol module 32 according to the QI standard or the PMA standard. Protocol module 32 passes the translated signal to control unit 2 for processing, and protocol module 32 transmits the control command signal from control unit 2 to multi-channel signal transmission module 33 according to the QI standard or the PMA standard. Multi-channel signal transmission module 33 simultaneously modulates the multi-channel signal according to the FSK mode and loads the modulated signal onto the specified coil of coil module unit 5.

As shown in Fig. 5, coil module unit 5 is the core part of the power transfer. Coil module unit 5 includes array signal antenna 50 and capacitor module 51 which are connected to each other. Array signal antenna 50 is composed of a plurality of sets of coils arranged according to the spatial distribution of the magnetic field; and array signal antenna 50 controls the operation of the corresponding single or multiple sets of array antennas through control unit 2. By doing so, multiple wireless charging devices are operated on the same platform, and each device can control the corresponding array antenna without interfering with others. Capacitor module 51 is an integrated circuit composed of a plurality of capacitors. Capacitor module 51 changes the capacitance value according to the instruction of control unit 2, so as to match array signal antenna 50 to generate different oscillation frequencies, thereby being compatible for the QI standard and the PMA standard.

In view of the limitations of the protection scope of the present invention, those skilled in the art should understand that various modifications or variations derived based on the technical solutions of the present invention by those skilled in the art without creative efforts shall be considered as falling within the protection scope of the present invention.

## Claims

1. An intelligent in-vehicle wireless charging device, comprising an electric power supply unit (1), a control unit (2), a signal modulation and demodulation unit (3), a driving unit (4), a coil module unit (5), and a communication unit (6); wherein the control unit (2) is connected to the electric power supply unit (1), the control unit (2) is connected to the signal modulation and demodulation unit (3), the control unit (2) is connected to the driving unit (4), and the control unit (2) is connected to the communication unit (6); the driving unit (4) is connected to the coil module unit (5); the coil module unit (5) is connected to the signal modulation and demodulation unit (3);
the electric power supply unit (1) is adapted to supply power to other units; the control unit (2) adapted to control the driving unit (4) to drive the coil module unit (5) to generate oscillation; the signal modulation and demodulation unit (3) adapted to demodulate information from electronic devices and simultaneously to modulate information sent by the control unit (2) onto the coil module unit (5); and the communication unit (6) adapted to interact and share information with devices internally on a vehicle or separated from the vehicle through the signal modulation and demodulation unit (3);
the signal modulation and demodulation unit (3) comprises a multi-channel signal identification module (30), a signal processing module (31), a protocol module (32), and a multi-channel signal transmission module (33); the multi-channel signal identification module (30), the signal processing module (31), the protocol module (32), and the multi-channel signal transmission module (33) are connected successively; the multi-channel signal identification module (30) is adapted to demodulate multi-channel ASK signals simultaneously to realize a conversion from an analog signal to a digital signal; the signal processing module (31) is adapted to be responsible for a routing management of a communication of multiple electronic devices, and to encode and encapsulate digital signals of the multi-channel signal identification module (30); an encapsulated signal is translated by the protocol module (32) adapted accordingly according to an QI standard or a PMA standard; the protocol module (32) adapted to pass translated signal to the control unit (2) for processing, ; to transmit a control command signal from the control unit (2) to the multi-channel signal transmission module (33) according to the QI standard or the PMA standard; the multi-channel signal transmission module (33) adapted to simultaneously modulate the multi-channel signal according to a FSK mode and to load a modulated signal onto a specified coil of the coil module unit (5).

2. The intelligent in-vehicle wireless charging device according to claim 1, wherein the electric power supply unit (1) comprises a protection module (10), a power management module (11), and a power output module (12); the protection module (10), the power management module (11), and the power output module (12) are connected successively; the power management module (11) is configured for a conversion of a wide voltage from 5 V to 25 V; and the power output module (12) is adapted to provide operating voltage for the wireless charging device.

3. The intelligent in-vehicle wireless charging device according to claim 1, wherein the control unit (2) comprises a learning module (20), a storage module (21), and a control module (22); the learning module (20), the storage module (21), and the control module (22) are connected successively; the learning module (20) is adapted to use a convolutional neural network algorithm to record ID numbers of various electronic devices, to analyse battery status of the electronic devices, and to store data into the storage module (21); the control module (22) adapted to extract the data from the storage module (21), and then to perform a BMS (Battery Management System) management for an electronic device ever recorded; and to use a fuzzy algorithm to control a driving operation of the driving unit (4).

4. The intelligent in-vehicle wireless charging device according to claim 1, wherein the driving unit (4) adapted to drive the coil module unit (5) to work by using a half-bridge or a full-bridge method.

5. The intelligent in-vehicle wireless charging device according to claim 1, wherein the coil module unit (5) comprises an array signal antenna (50) and a capacitor module (51); the array signal antenna (50) and the capacitor module (51) are connected to each other; the array signal antenna (50) comprises a plurality of sets of coils arranged according to a spatial distribution of a magnetic field; and the array signal antenna (50) is adapted to control an operation of corresponding single or multiple sets of array antennas through the control unit (2); the capacitor module (51) is an integrated circuit composed of a plurality of capacitors; and the capacitor module (51) is adapted to change capacitance values according to an instruction of the control unit (2) to match the array signal antenna (50) to generate different oscillation frequencies.

6. The intelligent in-vehicle wireless charging device according to claim 1, wherein a communication mode adopted by the communication unit (6) comprises LIN, CAN, MOST, and Bluetooth.

## Patentansprüche

1. Intelligente kabellose Ladevorrichtung im Fahrzeug, umfassend eine elektrische Stromversorgungseinheit (1), eine Steuereinheit (2), eine Signalmodulations- und Demodulationseinheit (3), eine Antriebseinheit (4), eine Spulenmoduleinheit (5) und eine Kommunikationseinheit (6); wobei die Steuereinheit (2) mit der elektrischen Stromversorgungseinheit (1) verbunden ist, die Steuereinheit (2) mit der Signalmodulations- und Demodulationseinheit (3) verbunden ist, die Steuereinheit (2) mit der Antriebseinheit (4) verbunden ist und die Steuereinheit (2) mit der Kommunikationseinheit (6) verbunden ist; die Antriebseinheit (4) mit der Spulenmoduleinheit (5) verbunden ist; die Spulenmoduleinheit (5) mit der Signalmodulations- und Demodulationseinheit (3) verbunden ist;
die elektrische Stromversorgungseinheit (1) ist angepasst, um andere Einheiten mit Strom zu versorgen; die Steuereinheit (2) ist angepasst, um die Antriebseinheit (4) zu steuern, um die Spulenmoduleinheit (5) anzutreiben, um eine Schwingung zu erzeugen; die Signalmodulations- und Demodulationseinheit (3) ist angepasst, um Informationen von elektronischen Geräten zu demodulieren und gleichzeitig Informationen zu modulieren, die von der Steuereinheit (2) an die Spulenmoduleinheit (5) gesendet werden; und die Kommunikationseinheit (6) ist angepasst, um Informationen mit Geräten zu interagieren und auszutauschen, die sich in einem Fahrzeug befinden oder durch die Signalmodulations- und Demodulationseinheit (3) vom Fahrzeug getrennt sind;
die Signalmodulations- und Demodulationseinheit (3) umfasst ein Mehrkanalsignalidentifikationsmodul (30), ein Signalverarbeitungsmodul (31), ein Protokollmodul (32) und ein Mehrkanalsignalübertragungsmodul (33); das Mehrkanalsignalidentifikationsmodul (30), das Signalverarbeitungsmodul (31), das Protokollmodul (32) und das Mehrkanalsignalübertragungsmodul (33) sind nacheinander verbunden; das Mehrkanalsignalidentifikationsmodul (30) ist angepasst, um mehrkanalige ASK-Signale gleichzeitig zu demodulieren, um eine Umwandlung von einem analogen Signal in ein digitales Signal zu realisieren; das Signalverarbeitungsmodul (31) ist angepasst, um für ein Routing-Management einer Kommunikation mehrerer elektronischer Geräte verantwortlich zu sein und digitale Signale des Mehrkanalsignalidentifikationsmoduls (30) zu kodieren und einzukapseln; ein eingekapseltes Signal wird von dem Protokollmodul (32) übersetzt, das entsprechend einem QI-Standard oder einem PMA-Standard angepasst ist; das Protokollmodul (32) ist angepasst, um ein übersetztes Signal an die Steuereinheit (2) zur Verarbeitung weiterzuleiten, um ein Steuerbefehlssignal von der Steuereinheit (2) an das Mehrkanalsignalübertragungsmodul (33) gemäß dem QI-Standard oder der PMA-Standard zu übertragen; das Mehrkanalsignalübertragungsmodul (33) ist angepasst, um das Mehrkanalsignal gleichzeitig gemäß einem FSK-Modus zu modulieren und um ein moduliertes Signal auf eine spezifizierte Spule der Spulenmoduleinheit (5) zu laden.

2. Intelligente kabellose Ladevorrichtung im Fahrzeug nach Anspruch 1, wobei die elektrische Stromversorgungseinheit (1) ein Schutzmodul (10), ein Energieverwaltungsmodul (11) und ein Leistungsausgangsmodul (12) umfasst; das Schutzmodul (10), das Energieverwaltungsmodul (11) und das Leistungsausgangsmodul (12) nacheinander verbunden sind; das Energieverwaltungsmodul (11) für eine Umwandlung einer breiten Spannung von 5 V bis 25 V konfiguriert ist; und das Leistungsausgangsmodul (12) angepasst ist, um Betriebsspannung für die drahtlose Ladevorrichtung bereitzustellen.

3. Intelligente kabellose Ladevorrichtung im Fahrzeug nach Anspruch 1, wobei die Steuereinheit (2) ein Lernmodul (20), ein Speichermodul (21) und ein Steuermodul (22) umfasst; das Lernmodul (20), das Speichermodul (21) und das Steuermodul (22) nacheinander verbunden sind; das Lernmodul (20) angepasst ist, um einen Faltungsalgorithmus für ein neuronales Netzwerk zu verwenden, um ID-Nummern verschiedener elektronischer Geräte aufzuzeichnen, um den Batteriestatus der elektronischen Geräte zu analysieren und Daten in dem Speichermodul (21) zu speichern; das Steuermodul (22) angepasst ist, um die Daten aus dem Speichermodul (21) zu extrahieren und dann ein BMS-Management (Batteriemanagementsystem) für ein jemals aufgezeichnetes elektronisches Gerät durchzuführen; und einen Fuzzy-Algorithmus zu verwenden, um einen Fahrbetrieb der Antriebseinheit (4) zu steuern.

4. Intelligente kabellose Ladevorrichtung im Fahrzeug nach Anspruch 1, wobei die Antriebseinheit (4) angepasst ist, um die Spulenmoduleinheit (5) anzutreiben, um unter Verwendung eines Halbbrücken- oder eines Vollbrückenverfahrens zu arbeiten.

5. Intelligente kabellose Ladevorrichtung im Fahrzeug nach Anspruch 1, wobei die Spulenmoduleinheit (5) eine Array-Signalantenne (50) und ein Kondensatormodul (51) umfasst; die Array-Signalantenne (50) und das Kondensatormodul (51) miteinander verbunden sind; die Array-Signalantenne (50) mehrere Sätze von Spulen umfasst, die gemäß einer räumlichen Verteilung eines Magnetfelds angeordnet sind; und die Array-Signalantenne (50) angepasst ist, um einen Betrieb entsprechender einzelner oder mehrerer Sätze von Array-Antennen durch die Steuereinheit (2) zu steuern; das Kondensatormodul (51) eine integrierte Schaltung ist, die aus mehreren Kondensatoren besteht; und das Kondensatormodul (51) angepasst ist, um Kapazitätswerte gemäß einer Anweisung der Steuereinheit (2) zu ändern, um sie an die Array-Signalantenne (50) anzupassen, um unterschiedliche Schwingungsfrequenzen zu erzeugen.

6. Intelligente kabellose Ladevorrichtung im Fahrzeug nach Anspruch 1, wobei ein von der Kommunikationseinheit (6) angenommener Kommunikationsmodus LIN, CAN, MOST und Bluetooth umfasst.

## Revendications

1. Dispositif de charge sans fil intelligent à bord du véhicule, comprenant une unité d'alimentation électrique (1), une unité de commande (2), une unité de modulation et de démodulation du signal (3), une unité d'entraînement (4), une unité de module de bobine (5) et une unité de communication (6) ; dans lequel l'unité de commande (2) est connectée à l'unité d'alimentation électrique (1), l'unité de commande (2) est connectée à l'unité de modulation et de démodulation du signal (3), l'unité de commande (2) est connectée à l'unité d'entraînement (4), et l'unité de commande (2) est connectée à l'unité de communication (6) ; l'unité d'entraînement (4) est connectée à l'unité de module de bobine (5) ; l'unité de module de bobine (5) est connectée à l'unité de modulation et de démodulation du signal (3) ;
l'unité d'alimentation électrique (1) est adaptée pour alimenter d'autres unités ; l'unité de commande (2) adaptée pour commander l'unité d'entraînement (4) pour entraîner l'unité de module de bobine (5) pour générer l'oscillation ; l'unité de modulation et de démodulation du signal (3) adaptée pour démoduler les informations provenant des dispositifs électroniques et simultanément pour moduler les informations envoyées par l'unité de commande (2) sur l'unité de module de bobine (5) ; et l'unité de communication (6) adaptée pour interagir et partager des informations avec des dispositifs situés à l'intérieur d'un véhicule ou séparés du véhicule par l'unité de modulation et de démodulation du signal (3) ;
l'unité de modulation et de démodulation du signal (3) comprend un module d'identification du signal multicanal (30), un module de traitement du signal (31), un module de protocole (32) et un module de transmission du signal multicanal (33) ; le module d'identification du signal multicanal (30), le module de traitement du signal (31), le module de protocole (32) et le module de transmission du signal multicanal (33) sont connectés successivement ; le module d'identification du signal multicanal (30) est adapté pour démoduler simultanément des signaux ASK multicanaux afin de réaliser une conversion d'un signal analogique en un signal numérique ; le module de traitement du signal (31) est adapté pour être responsable de la gestion du routage d'une communication de plusieurs dispositifs électroniques, et pour coder et encapsuler les signaux numériques du module d'identification du signal multicanal (30) ; un signal encapsulé est traduit par le module de protocole (32) adapté en conséquence selon une norme QI ou une norme PMA ; le module de protocole (32) adapté pour passer un signal traduit à l'unité de commande (2) pour traitement afin de transmettre un signal de commande de l'unité de commande (2) au module de transmission du signal multicanal (33) selon la norme QI ou la norme PMA ; le module de transmission du signal multicanal (33) adapté pour moduler simultanément le signal multicanal selon un mode FSK et pour charger un signal modulé sur une bobine spécifique de l'unité de module de bobine (5).

2. Dispositif de charge sans fil intelligent à bord du véhicule selon la revendication 1, dans lequel l'unité d'alimentation électrique (1) comprend un module de protection (10), un module de gestion de la puissance (11) et un module de sortie de la puissance (12) ; le module de protection (10), le module de gestion de la puissance (11) et le module de puissance de sortie (12) sont connectées successivement ; le module de gestion de la puissance (11) est configuré pour une conversion d'une large tension de 5 V à 25 V ; et le module de sortie de puissance (12) est adapté pour fournir une tension de fonctionnement au dispositif de charge sans fil.

3. Dispositif de charge sans fil intelligent à bord du véhicule selon la revendication 1, dans lequel l'unité de commande (2) comprend un module d'apprentissage (20), un module de stockage (21) et un module de commande (22) ; le module d'apprentissage (20), le module de stockage (21) et le module de commande (22) sont connectés successivement ; le module d'apprentissage (20) est adapté pour utiliser un algorithme de réseau neuronal convolutif pour enregistrer les numéros ID de divers dispositifs électroniques afin d'analyser l'état de la batterie des dispositifs électroniques, et pour stocker les données dans le module de stockage (21) ; le module de commande (22) adapté pour extraire les données du module de stockage (21), et puis pour effectuer une gestion BMS (Battery Management System) pour un dispositif électronique jamais enregistré ; et pour utiliser un algorithme flou pour commander une opération de conduite de l'unité d'entraînement (4).

4. Dispositif de charge sans fil intelligent à bord du véhicule selon la revendication 1, dans laquelle l'unité d'entraînement (4) est adaptée pour entraîner l'unité de module de bobine (5) à travailler en utilisant une méthode en demi-pont ou en pont complet.

5. Dispositif de charge sans fil intelligent à bord du véhicule selon la revendication 1, dans lequel l'unité de module de bobine (5) comprend une antenne de signal de réseau (50) et un module de condensateur (51) ; l'antenne de signal de réseau (50) et le module de condensateur (51) sont connectés l'un à l'autre ; l'antenne de signal de réseau (50) comprend une pluralité d'ensembles de bobines disposées selon une distribution spatiale d'un champ magnétique ; et l'antenne de signal de réseau (50) est adaptée pour commander le fonctionnement d'un ou de plusieurs ensembles d'antennes de signal de réseau correspondants par l'intermédiaire de l'unité de commande (2) ; le module de condensateurs (51) est un circuit intégré composé d'une pluralité de condensateurs; et le module de condensateur (51) est adapté pour changer les valeurs de capacité selon une instruction de l'unité de commande (2) afin d'adapter l'antenne de signal de réseau (50) pour générer différentes fréquences d'oscillation.

6. Dispositif de charge sans fil intelligent à bord du véhicule selon la revendication 1, dans lequel un mode de communication adopté par l'unité de communication (6) comprend LIN, CAN, MOST et Bluetooth.
